# EUROPEAN PATENT APPLICATION

(11) **EP 1 962 181 A1**
(43) Date of publication of application: **27.08.2008**
(21) Application number: 06833543.9
(22) Date of filing: 28.11.2006
(51) Int. Cl.: G06F 5/06, G06F 12/02

(54) **BUFFER CONTROL DEVICE AND BUFFER MEMORY**

(30) Priority: 02.12.2005 JP 2005349987
(71) Applicant: MATSUSHITA ELECTRIC INDUSTRIAL CO., LTD., Osaka 571-8501 (JP)
(72) Inventor: FUJIBAYASHI, Masanori, c/o Matsushita Electric Industrial Co.,Ltd., IPROC, 7F Twin 21 OBP, Osaka-shi, Osaka, 540-6207 (JP); HIGAKI, Nobuo, c/o Matsushita Electric Industrial Co., Ltd., IPROC, 7F Twin 21 OBP, Osaka-shi, Osaka, 540-6207 (JP); KURATA, Kazushi, c/o Matsushita Electric Industrial Co., Ltd., IPROC, 7F Twin 21 OBP, Osaka-shi, Osaka, 540-6207 (JP); MATSUI, Tomoko, c/o Matsushita Electric Industrial Co., Ltd., IPROC,7F Twin 21 OBP, Osaka-shi, Osaka, 540-6207 (JP)
(74) Representative: Pautex Schneider, Nicole Véronique
(86) International application number: PCT/JP2006/323739
(87) International publication number: WO 2007/063858

(57) **Abstract**

The buffer control device of this invention includes: a pointer holding unit (102, 103) which holds a virtual pointer different from a read pointer and a write pointer; an access control unit (106, 111) that controls an access to a ring buffer; a judging unit (104 a/b, 109 a/b) that judges whether or not one of the read pointer and the write pointer has reached an address substantially identical to an address indicated by the virtual pointer; and stop flags Sr and Sw that disable a normal access using the one of the read pointer and the write pointer, when the judging unit judges that the one of the read pointer and the write pointer has reached the address substantially identical to the address indicated by the virtual pointer, the normal access being controlled by the access control unit, wherein the access control unit (106, 111) further controls a reaccess to the ring buffer.

## Description

### Technical Field

The present invention relates to a buffer control device and a buffer memory that control a buffer memory as a first-in first-out ring buffer, using a read pointer and a write pointer.

### Background Art

There exists techniques of allowing a buffer memory to function as a first-in first-out (FIFO) ring buffer conventionally. Such a ring buffer is used for temporarily storing an input bit stream in a decoding device that decodes bit streams that are compressed moving picture data. A controller that controls the buffer memory as a ring buffer includes one write pointer indicating an address for writing current data and one read pointer indicating an address for reading current data.

A write pointer is updated to a next writable address every time data is written into a buffer memory. A read pointer is updated to a next readable address every time data is read from a buffer memory. Although a read pointer can be updated up to an address in which data has been written, in other words, an address indicated by a write pointer, the read pointer cannot be updated up to an address preceding the address indicated by the write pointer. Although a write pointer can be updated up to an address for reading data, in other words, an address indicated by a read pointer, the write pointer cannot be updated up to an address preceding the address indicated by the read pointer. Updating of a write pointer and a read pointer causes the pointers to be incremented or decremented along a common circular direction.

With this, it is possible to write data in a buffer up to the address indicated by the read pointer. Furthermore, it is possible to read data up to an address indicated by the write pointer. As described above, a memory region in a buffer memory is managed by a circular first-in first-out (FIFO) scheme. Patent Reference 1 is one of the documents that introduce such prior art.
Patent Reference 1: Japanese Unexamined Patent Application Publication No. 5-289847

### Disclosure of Invention

### Problems that Invention is to Solve

However, there is a problem that data once read cannot be reread from a buffer memory to be reused in the aforementioned prior art. This is because data can be overwritten after the data is read from the buffer memory, and thus, there is no guarantee that the reread data is identical to the one previously read.

More specifically, in the case where the buffer memory temporarily holds a bit stream and an error occurs when analyzing a header of the read bit stream and the like, it takes some time for rereading the data, and a problem that impairs real-time reproduction of a moving picture arises. This is because in the prior art, it is necessary to temporarily clear data in a buffer and reread the data from a medium and the like that records the bit stream.

Furthermore, there is a similar problem that the temporarily written data cannot be overwritten in a buffer so as to update the data. This is because the data temporarily written in the buffer can be read from the buffer, and there is no guarantee that the temporarily written data is not read yet.

The present invention has been conceived for solving the aforementioned problems, and the object is to provide the buffer control device and the buffer memory device that are capable of reusing once read data, using a read pointer and a write pointer, in a buffer memory as a first-in first-out ring buffer.

### Means to Solve the Problems

In order to achieve the aforementioned object, the buffer control device according to the present invention is a buffer control device that controls a buffer memory as a first-in first-out ring buffer, using a read pointer and a write pointer, and includes: a pointer holding unit which holds a virtual pointer different from the read pointer and the write pointer; an access control unit that controls an access to the ring buffer, according to the read pointer and the write pointer; a judging unit that judges whether or not one of the read pointer and the write pointer has reached an address substantially identical to an address indicated by the virtual pointer; and a disabling unit that disables a normal access using the one of the read pointer and the write pointer, when the judging unit judges that the one of the read pointer and the write pointer has reached the address substantially identical to the address indicated by the virtual pointer, the normal access being controlled by the access control unit, wherein the access control unit controls a reaccess to the ring buffer, within an address range from the address indicated by the virtual pointer to an address indicated by the other of the read pointer and the write pointer, in response to a request from an external device.

With this structure, data once accessed can be re-accessed within the address range from the address indicated by the virtual pointer to the address indicated by another pointer. With this, data temporarily held in the buffer memory can be reused or updated by overwriting data.

Here, the one of the read pointer and the write pointer may be the write pointer, the disabling unit may include a flag holding unit which holds, as a stop flag, a result of the judging obtained by the judging unit, the access control unit may disable a write access to the ring buffer according to the stop flag, and may control rereading data from the ring buffer, within an address range from the address indicated by the virtual pointer to an address indicated by the read pointer, in response to a request from the external device.

Here, the buffer control device may further include a pointer setting unit that sets a value of the virtual pointer, in response to a request from the external device.

With the aforementioned structure, when it is necessary to reuse data written in the buffer for some reason, data write on the data to be possibly reread is disabled by setting, in the virtual read pointer, an address of the data to be possibly reused. In this case, since the data write is disabled within the address range, it is ensured that the data which is reread is identical to data previously read.

Here, the pointer setting unit may hold a valid flag indicating whether or not the virtual pointer is valid, in response to a request from the external device, the judging unit may include: a first judging unit that judges whether or not the write pointer has reached an address substantially identical to the address indicated by the read pointer, when the valid flag indicates that the virtual pointer is invalid; and a second judging unit that judges whether or not the write pointer has reached an address substantially identical to the address indicated by the virtual pointer, when the valid flag indicates that the virtual pointer is valid, and the stop flag may hold a result of the judging obtained by the first judging unit, when the valid flag indicates that the virtual pointer is invalid, and may hold a result of the judging obtained by the second judging unit, when the valid flag indicates that the virtual pointer is valid.

With this structure, when the valid flag is invalid, the buffer memory can be used as a simple ring buffer, and when the valid flag is valid, the buffer memory can be used as a ring buffer having a function of reusing data. In other words, the buffer memory can be switched to the simple ring buffer and the ring buffer having the function of reusing data, by holding a valid flag.

Here, the pointer setting unit may set the virtual pointer so as to keep a difference between a value of the read pointer and a value of the virtual pointer constant.

With this structure, since the data corresponding to the difference can always be reused, the external device does not have to set a virtual pointer.

Here, the pointer setting unit may change the read pointer to indicate an address within the address range, in response to a request from the external device, and the access control unit may control the rereading of data from the ring buffer, according to the changed read pointer.

With this structure, when it is necessary to reread data, the data can be reread by changing the address indicated by the read pointer which is currently used for reading data to an address of data to be reread. In other words, once changing the read pointer, it is possible to reuse data by the normal access operation.

Furthermore, the one of the read pointer and the write pointer may be the read pointer, the disabling unit may include a flag holding unit which holds, as a stop flag, a result of the judging obtained by the judging unit, the access control unit may disable a read access to the ring buffer according to the stop flag, and may control rewriting data to the ring buffer, within an address range from the address indicated by the virtual pointer to an address indicated by the write pointer, in response to a request from the external device.

With this structure, when it is necessary to rewrite data that has be written in the buffer for some reason, data read within the address range is disabled and the data can be rewritten by setting, in advance, an address of the data that is possibly rewritten in the virtual pointer. In this case, since reading is disabled within the address range, it is ensured that the data to be rewritten is not read yet.

### Effects of the Invention

The buffer control device of the present invention can reuse data that has been once read. In this case, it is ensured that the data to be reused is identical to data previously read. Furthermore, data once written can be overwritten again. In this case, it is ensured that the data to be rewritten is not read yet.

### Brief Description of Drawings

FIG. 1 is a block diagram illustrating the system configuration including the buffer memory device having the buffer control device according to the first embodiment of the present invention;
FIG. 2 illustrates a read pointer;
FIG. 3 illustrates a virtual read pointer;
FIG. 4 illustrates a write pointer;
FIG. 5 illustrates a virtual write pointer;
FIG. 6 illustrates time charts indicating a variation example of the virtual write pointer, the first read pointer, and the stop flag Sw;
FIG. 7 illustrates time charts indicating a variation example of the virtual read pointer, the first write pointer, and the stop flag Sr;
FIG. 8 illustrates a flowchart indicating processing in the control processor 118 for setting a virtual pointer according to an external request;
FIG. 9 illustrates the first read pointer, the virtual read pointer, the first write pointer, and the virtual write pointer;
FIG. 10 illustrates the first write pointer, the virtual write pointer, the first read pointer, and the virtual read pointer;
FIG. 11 is a block diagram illustrating the configuration of a picture decoding system that is applied to the buffer control device and the buffer memory device of the present invention; and

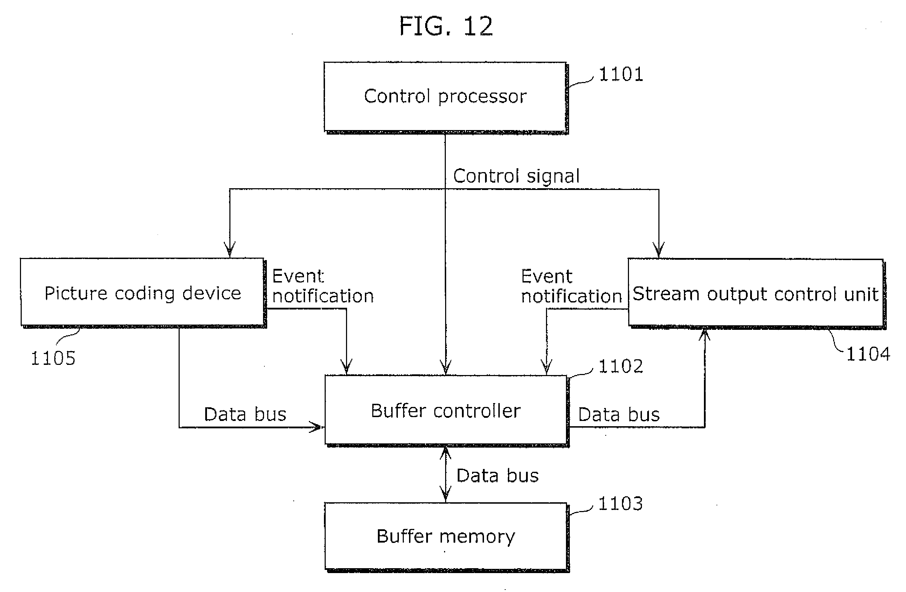

FIG. 12 is a block diagram illustrating the configuration of a picture coding system that is applied to the buffer control device and the buffer memory device of the present invention.

### Numerical References

- 101: Buffer controller
- 102: Read pointer holding unit
- 103: Flag holding unit
- 104a: First read pointer judging unit
- 104b: Second read pointer judging unit
- 105: Read pointer control unit
- 106: Data read control unit
- 107: Write pointer holding unit
- 109a: First write pointer judging unit
- 109b: Second write pointer judging unit
- 110: Write pointer control unit
- 111: Data write control unit 111
- 116: DMA controller
- 117: DMA controller
- 118: Control processor
- 119: Buffer memory
- 120: Read access control unit
- 130: Write access control unit
- Vr: Valid flag
- Vw: Valid flag
- Sr: Read stop flag
- Sw: Write stop flag

### Best Mode for Carrying Out the Invention

### (First Embodiment)

The first embodiment of the present invention is to be described with reference to the diagrams.

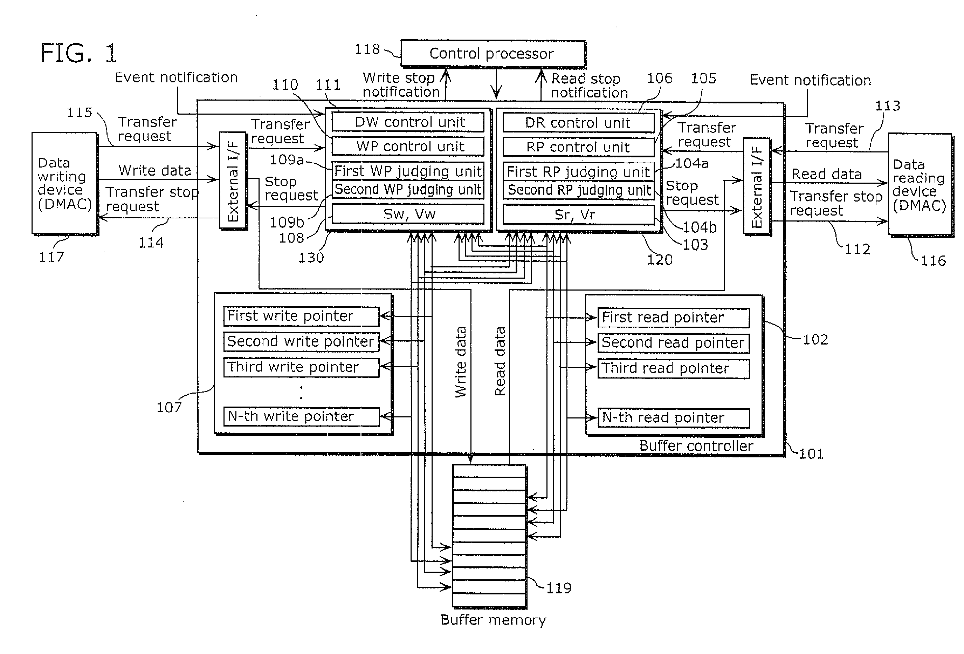

FIG. 1 is a block diagram illustrating the system configuration including the buffer memory device having the buffer control device according to the first embodiment of the present invention. The system in the diagram controls a buffer memory as a first-in first-out ring buffer, and includes: a buffer control device (a buffer controller 101 and a control processor 118) which reuses data held in the ring buffer; a DMA controller 116 as a data reading device that reads external data; a DMA controller 117 as a data writing device that writes external data; and a buffer memory 119.

The buffer controller 101 includes: a read pointer holding unit 102 that holds a normal read pointer and a virtual read pointer indicating a leading address of data to be reused; a write pointer holding unit 107 that holds a normal write pointer and a virtual write pointer indicating a leading address of a region in which data can be rewritten; a read access control unit 120 that controls a normal access and a reread access to the buffer memory 119; and a write access control unit 130 that controls a normal write access and a rewrite access to the buffer memory 119. The buffer controller 101 is connected to the buffer memory 119, the control processor 118, the DMA controller 116, and the DMA controller 117.

The read access control unit 120 includes: a flag holding unit 103 that holds a valid flag Vr indicating whether or not the virtual read pointer is valid and a stop flag Sr indicating whether or not the read access to the buffer memory 119 should be disabled; a first read pointer judging unit (hereinafter referred to as first PR judging unit) 104a that judges whether or not the normal read pointer has reached an address substantially identical to a address indicated by the normal write pointer in the case where the virtual write pointer is invalid; a second read pointer judging unit (hereinafter referred to as second PR judging unit) 104b that judges whether or not the normal read pointer has reached an address substantially identical to the address indicated by the virtual write pointer in the case where the virtual write pointer is valid; a read pointer control unit 105 that updates (increments in the present embodiment) the normal read pointer every time a read access is performed; and a data read control unit 106.

The write access control unit 130 includes: a flag holding unit 108 that holds a valid flag Vw indicating whether or not the virtual write pointer is valid and a stop flag Sw indicating whether or not the write access to the buffer memory 119 should be disabled; a first write pointer judging unit (hereinafter referred to as first WP judging unit) 109a that judges whether or not the normal write pointer has reached an address substantially identical to the address indicated by the normal read pointer in the case where the virtual read pointer is invalid; a second write pointer judging unit (hereinafter referred to as second WP judging unit) 109b that judges whether or not the normal write pointer has reached an address substantially identical to the address indicated by the virtual read pointer in the case where the virtual read pointer is valid; a write pointer control unit 110 that updates (increments in the present embodiment) the normal write pointer every time a write access is performed; and a data write control unit 111.

The read pointer holding unit 102 holds the first to n-th read pointers. In the present embodiment, it is assumed that n is two and that the first read pointer is a normal read pointer, and the second read pointer is a virtual read pointer.

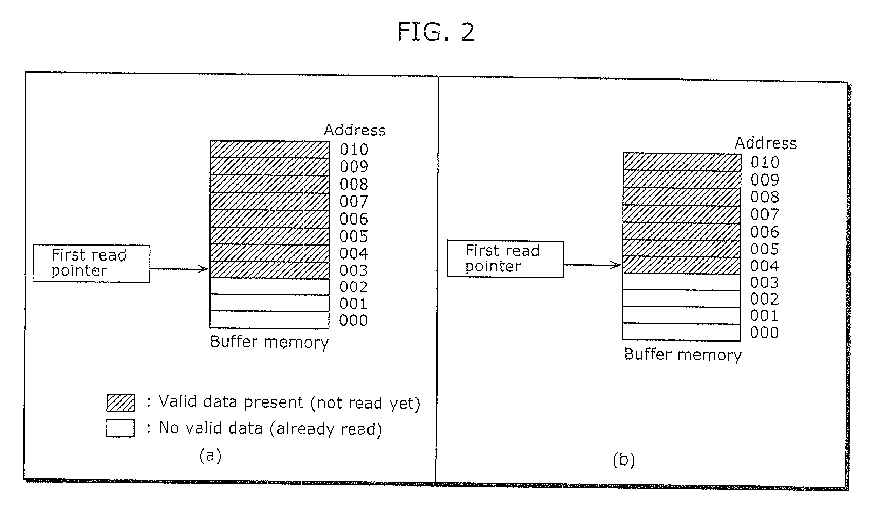

The first read pointer is used as a normal read pointer indicating an address for reading data in the buffer memory 119 and further used as a read pointer for a reread access in the present embodiment. FIG. 2 illustrates the first read pointer. The diagonally shaded portion in the diagram indicates a region in which valid data within the buffer memory 119 is held, and the blank region indicates a region in which invalid data is held. As illustrated in FIG. 2 (a), the first read pointer indicates an address of unread leading data in the data held in the buffer memory used as a first-in first-out ring buffer. Furthermore, as illustrated in FIG. 2 (b), immediately after performing a read access to the buffer memory 119, the first read pointer is updated to the next address and indicates an address of the unread leading data.

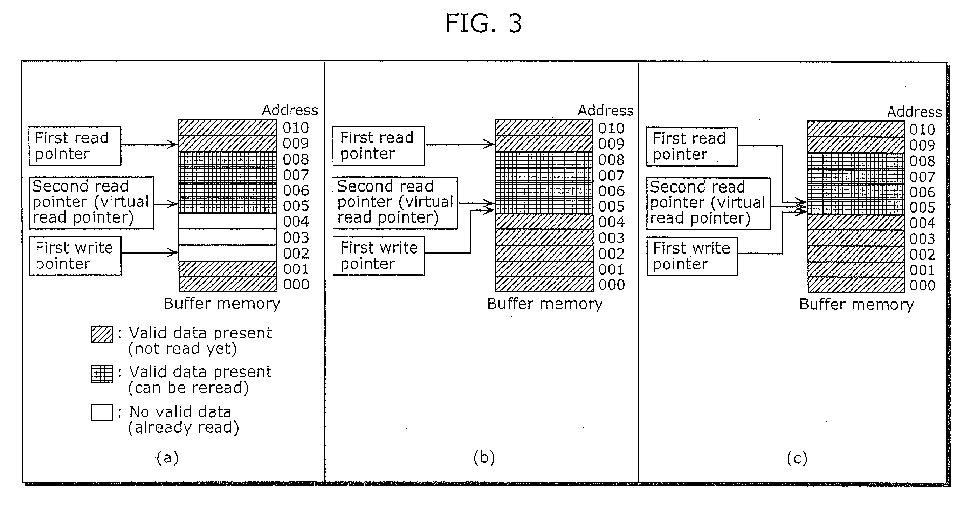

The second read pointer is used as a virtual read pointer indicating a leading address of data that has already been read and that is desired to be reused, when the valid flag Vr indicating whether or not the second read pointer is valid is valid. Thus, the second read pointer (referred to as virtual read pointer) is set so as to prevent a write pointer from being updated so that the write pointer cannot exceed the virtual read pointer. FIG. 3 illustrates the virtual read pointer. The diagonally shaded portion in the diagram indicates a region in which valid data is held as illustrated in FIG. 2, and the mesh portion indicates a region in which data that can be reread is held. As illustrated in FIG. 3 (a), the first read pointer, the virtual read pointer, and the first write pointer indicate respective regions. Data within an address range from an address indicated by the virtual read pointer to an address indicated by the first read pointer (data ranging from an address 005 to an address 008 in FIG. 3 (a)) is data that can be reread, and it is ensured that the data is identical to the previously read data. This is because the write pointer (the first write pointer) is controlled so as not to exceed the virtual read pointer even when a write access to the buffer memory 119 is being continued in a state illustrated in FIG. 3 (a). In other words, when repetition of a write access to the buffer memory 119 leads to a state illustrated in FIG. 3 (b), the write access to the buffer memory 119 is disabled. With this, the data up to the address indicated by the first read pointer within the address range is protected so as not to be written.

The write pointer holding unit 107 holds the first to n-th write pointers. In the present embodiment, it is assumed that n is two, that the first write pointer is a normal write pointer, and that the second write pointer is a virtual write pointer.

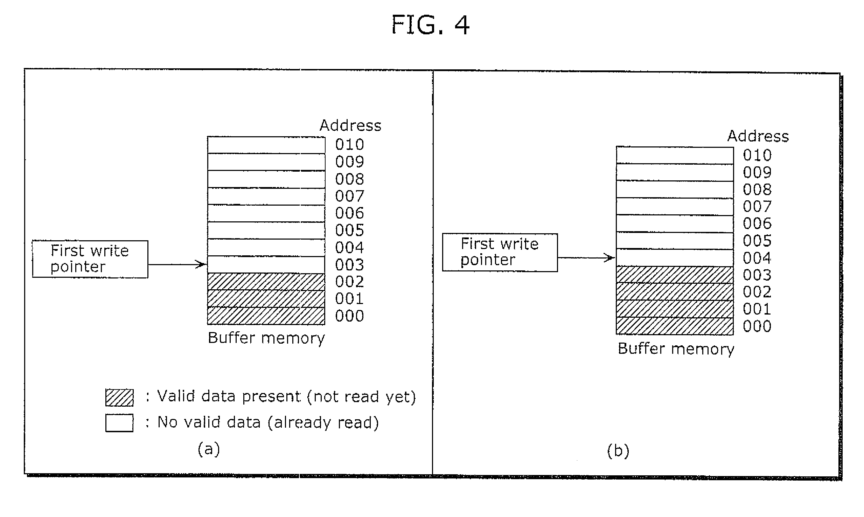

The first write pointer is used as a normal write pointer indicating a write address of the buffer memory 119 and is further used as a write pointer for a rewrite access in the present embodiment. FIG. 4 illustrates the first write pointer. The diagonally shaded portion in the diagram indicates a region in which valid data is held. As illustrated in FIG. 4 (a), the first write pointer indicates an address of an unwritten leading region in the data held in the buffer memory used as a first-in first-out ring buffer. Furthermore, as illustrated in FIG. 4 (b), immediately after performing a write access to the buffer memory 119, the first write pointer is updated to the next address, and indicates an address of an unwritten region.

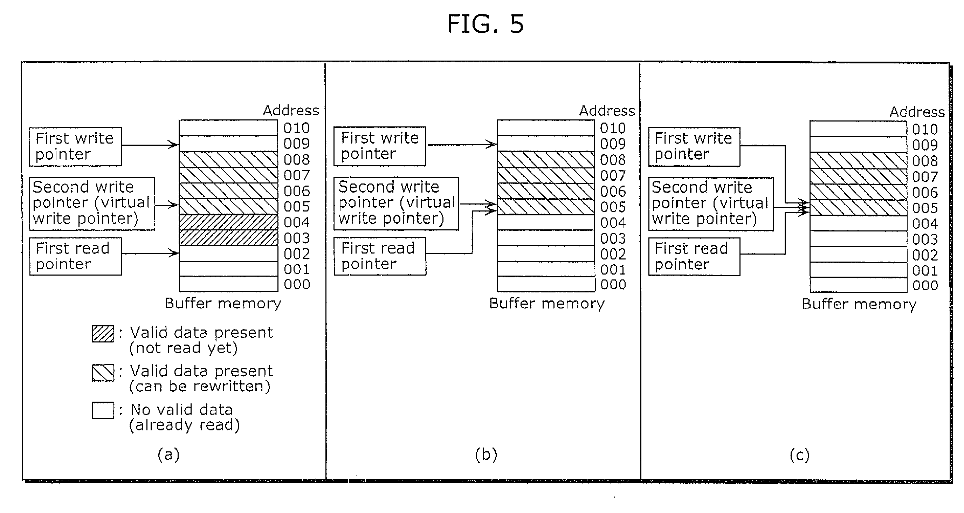

The second write pointer is used as a virtual write pointer indicating a leading address of a region that has already been written and that is desired to be rewritten, when the valid flag Vw indicating whether or not the second write pointer is valid is valid. Thus, the second write pointer (referred to as virtual write pointer) is set so as to prevent a read pointer from being updated so that the read pointer cannot exceed the virtual write pointer. FIG. 5 illustrates the virtual write pointer. In the diagram, the left-downward shaded portion indicates a region in which valid data is held as illustrated in FIG. 2, and the right-downward shaded portion indicates a region that can be rewritten. As illustrated in FIG. 5 (a), the first write pointer, the virtual write pointer, and the first read pointer indicate respective regions. Data within an address range from an address indicated by the virtual write pointer to an address indicated by the first write pointer (region ranging from an address 005 to an address 008 in FIG. 5 (a)) is data that can be rewritten, and can be overwritten on data previously written. This is because the read pointer (the first read pointer) is controlled so as not to exceed the virtual read pointer even when the read access to the buffer memory 119 is being continued in a state illustrated in FIG. 5 (a). In other words, when repetition of a read access to the buffer memory 119 leads to a state illustrated in FIG. 5 (b), the read access to the buffer memory 119 is disabled. With this, the data within a range from the address indicated by the virtual write pointer to the address indicated by the first write pointer is protected so as not to be read.

The flag holding unit 103 within the read access control unit 120 holds the valid flag Vr indicating whether or not the virtual read pointer is valid and the stop flag Sr indicating whether or not a read access to the buffer memory 119 should be disabled. Among these, the valid flag Vr is a flag that can be set according to an instruction from an external device, such as the DMA controller 116.

Furthermore, when the valid flag Vr indicates that the virtual read pointer is invalid, the first RP judging unit 104a sets the judgment result in the stop flag Sr. In other words, when the valid flag Vr indicates "invalid" and the first RP judging unit 104a judges that the normal read pointer has reached the normal write pointer, the stop flag Sr is set to "1" indicating "disable", and when the first RP judging unit 104a judges that it has not reached the normal write pointer, the stop flag Sr is set to "0" indicating "enable". Furthermore, when the valid flag Vr indicates "valid", the second PR judging unit 104b sets the judgment result in the stop flag Sr. In other words, when the valid flag Vr indicates "valid" and the second RP judging unit 104b judges that the normal read pointer has reached the virtual write pointer, the stop flag Sr is set to "1" indicating "disable", and when the second RP judging unit 104b judges that it has not reached the virtual write pointer, the stop flag Sr is reset to "0" indicating "enable".

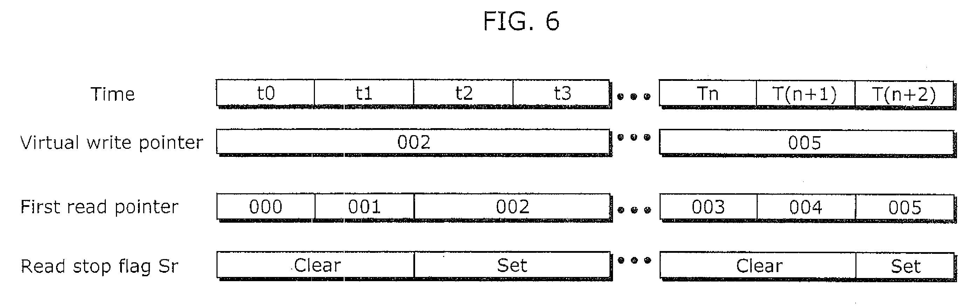

FIG. 6 illustrates time charts indicating a variation example of the virtual write pointer, the first read pointer, and the stop flag Sr, when the valid flag Vw indicates "valid". In the diagram, addresses of the virtual write pointer, addresses of the first read pointer, and the state of the stop flag Sr are indicated for each cycle period. The virtual write pointer indicates an address "002" during cycle periods t0 to t3. The first read pointer is updated from an address "000" to "002" with the read access performed during the cycle periods t0 to t2. During the cycle period t2, the first read pointer has reached the virtual write pointer, and the address indicated by the first read pointer becomes substantially the same address as that of the virtual write pointer. During the cycle period t2, the second PR judging unit 104b judges that the first read pointer has reached the virtual write pointer, and the stop flag Sr is set to "1". Furthermore, during the cycle period t (n+2), the second PR judging unit 104b judges that the first read pointer has reached the virtual write pointer, and the stop flag Sr is set to "1". The set stop flag is cleared by changing the virtual write pointer or by invalidating the virtual write pointer.

When the stop flag Sr indicates "enable", the data read control unit 106 controls a read access to the buffer memory 119 according to the first read pointer, and when the stop flag Sr indicates "disable", the data read control unit 106 disables the read access (in other words, no operation is newly started). In addition, regardless of a value of the stop flag Sr, the data read control unit 106 controls a reread access to a ring buffer within a range from an address indicated by the virtual read pointer to an address indicated by the first read pointer, in response to a request from an external device. When the control processor 118 changes the first read pointer to indicate an address within the aforementioned address range, in response to a request from an external device to perform a reread in the present embodiment, simultaneously, the stop flag Sr is changed so as to indicate "enable". Thus, a disabling function of the stop flag Sr is effectively used.

The flag holding unit 108 within the write access control unit 130 holds the valid flag Vw indicating whether or not a virtual write pointer is valid and the stop flag Sw indicating whether or not a write access to the buffer memory 119 should be disabled. Among these, the valid flag Vw is a flag that can be set according to an instruction from an external device, such as the DMA controller 117.

Furthermore, when the valid flag Vw indicates "invalid", the first WP judging unit 109a sets the judgment result in the stop flag Sw. In other words, when the valid flag Vr indicates "invalid" and the first WP judging unit 109a judges that the normal write pointer has reached the normal read pointer, the stop flag Sw is set to "1" indicating "disable", and when the first WP judging unit 109a judges that it has not reached the normal read pointer, the stop flag Sw is set to "0" indicating "enable". Furthermore, when the valid flag Vr indicates "valid", the second WP judging unit 109b sets the judgment result in the stop flag Sr. In other words, when the valid flag Vr indicates "valid" and the second WP judging unit 109b judges that the normal write pointer has reached the virtual read pointer, the stop flag Sr is set to "1" indicating "disable", and when the second WP judging unit 109b judges that it has not reached the virtual read pointer, the stop flag Sr is reset to "0" indicating "enable".

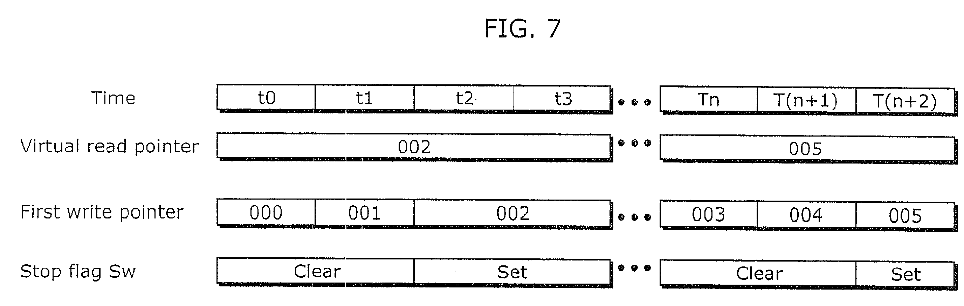

FIG. 7 illustrates time charts indicating a variation example of the virtual read pointer, the first write pointer, and the stop flag Sw, when the valid flag Vr indicates "valid". In the diagram, addresses of the virtual read pointer, addresses of the first write pointer, and the state of the stop flag Sw are indicated. The virtual read pointer indicates an address "002" during cycle periods t0 to t3. The first write pointer is updated from an address "000" to "002" with the read access performed during the cycle periods t0 to t2. During the cycle period t2, the first write pointer has reached the virtual read pointer, and the address indicated by the first write pointer becomes substantially the same address as that of the virtual read pointer. During the cycle period t2, the second WR judging unit 109b judges that the first write pointer has reached the virtual read pointer, and the stop flag Sw is set to "1". Furthermore, during the cycle period t (n+2), the second WR judging unit 109b judges that the first write pointer has reached the virtual read pointer, and the stop flag Sw is set to "1". The set stop flag Sw is cleared by changing the virtual write pointer or by invalidating the virtual write pointer.

When the stop flag Sw indicates "enable", the data write control unit 111 controls a write access to the buffer memory 119 according to the first write pointer, and when the stop flag Sw indicates "disable", the data write control unit 111 disables a read access (in other words, no operation is newly started). In addition, regardless of a value of the stop flag Sw, the data read control unit 106 controls a rewrite access to a ring buffer within an address range from an address indicated by a virtual write pointer to an address indicated by the first write pointer, in response to a request from an external device. When the control processor 118 changes the first write pointer to indicate an address within the aforementioned address range, in response to a request from the external device to perform a reread in the present embodiment, simultaneously, the stop flag Sw is changed so as to indicate "enable". Thus, a disabling function of the stop flag Sw is effectively used.

The operation of the buffer control device in the first embodiment of the present invention that is configured as described above is to be described hereinafter.

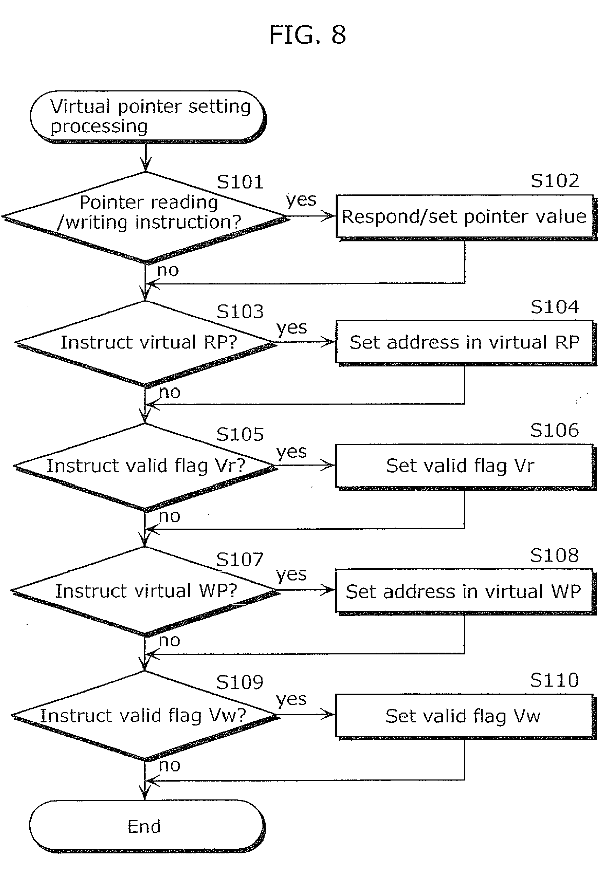

FIG. 8 illustrates a flowchart indicating processing in the control processor 118 for setting a virtual pointer in response to a request from an external device.

The control processor 118 accepts a request regarding a virtual pointer from a device that can be a master that accesses a buffer memory (such as DMA controllers 116 and 117). The requested instructions include a pointer reading instruction, a virtual read pointer setting instruction, a valid flag Vr setting instruction, a virtual write pointer setting instruction, and a valid flag Vw setting instruction.

As described in the diagram, when the control processor 118 accepts a pointer reading instruction as well as specification of a pointer type, it reads a value of a pointer specified by the read pointer holding unit 102 and the write pointer holding unit 107, and responds the read value to the external device (S101, S102). With this, the external device can obtain a current value of the first read pointer and determine an address indicated by the virtual read pointer depending on a size of data that is to be reread. Similarly, the external device can obtain a current value of the first write pointer and determine an address indicated by the virtual write pointer depending on a size of data that is to be rewritten. Furthermore, when the control processor 118 accepts a pointer writing instruction as well as specification of a pointer type and a value, it sets, in the pointer, the value specified by the read pointer holding unit 102 and the write pointer holding unit 107.

When the control processor 118 accepts a virtual read pointer setting instruction as well as specification of an address, it sets the address in the virtual read pointer within the read pointer holding unit 102 (S103, S104), and when accepting a valid flag Vr setting instruction as well as specification of a value of a flag, it sets, in the virtual read pointer, the value specified by the valid flag Vr within the flag holding unit 103 (S105, S106).

Similarly, when the control processor 118 accepts a virtual write pointer setting instruction as well as specification of an address, it sets the address in the virtual write pointer within the write pointer holding unit 107 (S107, S108), and when accepting a valid flag Vw setting instruction as well as specification of a value of a flag, it sets, in the virtual write pointer, the value specified by the valid flag Vw within the flag holding unit 108 (S105, S106).

As such, for the device to be a master for accessing a buffer memory, when the valid flag Vr is set to "invalid" for reading data, the buffer memory 119 can be used as a normal ring buffer, and when the valid flag Vr is set to "valid", the buffer memory 119 can be used as a ring buffer having a function for reusing data. In other words, by setting a valid flag, the buffer memory can be used by switching a simple ring buffer and a ring buffer with a function for reusing data. Similarly, when setting the valid flag Vr, for the device to be a master for accessing a buffer memory, the buffer memory can be used by switching a ring buffer that is simple and can be written once and a ring buffer that can be rewritten.

Next, using FIG. 3 (b) and (c), the first operation example in the case where a virtual read pointer is set to "valid" is to be described.

The DMA controller 117 issues a transfer request to the buffer controller 101 for writing data. In this case, the buffer controller 101 performs a write access of data to a location of a buffer indicated by the first write pointer, using the write pointer control unit 110 and the data write control unit 111. With this write access, the first write pointer is updated. In this case, the second write judging unit 109b judges a relationship between the virtual read pointer and the first write pointer. When the virtual read pointer and the first write pointer indicate substantially the same location of the buffer, the second write judging unit 109b judges that data cannot be written, and the write stop flag Sw within the flag holding unit 108 is set. In this case, the buffer controller 101 notifies the DMA controller 117 of a transfer stop request 114 so as to disable writing the data. The state is illustrated in FIG. 3 (b).

In this state, the control processor 118 issues a request to the data read control unit 106 so that the data read control unit 106 changes the first read pointer to indicate a location of the buffer indicated by the virtual read pointer, using the read pointer control unit 105. The state is illustrated in FIG. 3 (c). Then, the DMA controller 116 reads data from the changed location indicated by the first read pointer.

As described above, the buffer controller 101 can reread previously read data by protecting the data from being written.

Note that although a location indicated by the first read pointer is changed in response to a request notified by the control processor 118, an event notified by an external device other than the control processor 118 to a buffer controller may be used for changing the location.

Furthermore, when the location indicated by the first read pointer is moved, the location may be moved to the location indicated by the virtual read pointer, regardless of a location indicated by the write pointer.

Furthermore, although the virtual read pointer indicates a location of a buffer from which data has been read by a DMA controller, the pointer may indicate a location from which data is not read yet.

Furthermore, although the read pointer is changed to indicate the location indicated by the virtual read pointer in the present embodiment, the read pointer may be changed to indicate the location indicated by a read pointer other than this read pointer.

Furthermore, although the DMA controller 116 that reads data and the DMA controller 117 that writes data are different DMA controllers in the present embodiment, they may be an identical DMA controller.

Furthermore, using FIG. 5 (b) and (c), the second operation example in the case where a virtual write pointer is set to "valid" is to be described.

The virtual write pointer indicates a location of the buffer in which a DMA controller has written data, simultaneously when indicating a location in which data read is disabled.

The DMA controller 116 issues a transfer request to the buffer controller 101 for reading data. In this case, the buffer controller 101 performs a read access of data to a location of a buffer indicated by the first read pointer, using the write pointer control unit 105 and the data read control unit 106. The second read judging unit 104b judges a relationship between the virtual write pointer and the first read pointer. In this case, as illustrated in FIG. 5 (b), when the virtual write pointer and the first read pointer indicate the same location of the buffer, the second read judging unit 104b judges that data cannot be read, and the read stop flag Sr is set. In this case, the buffer controller notifies the DMA controller of a transfer stop request denoted by 112 so as to disable reading the data.

In this state, the control processor 118 issues a request to the data write control unit 111 so that the data write control unit 111 changes the first write pointer to indicate a location of the buffer indicated by the virtual write pointer, using the write pointer control unit 110. The state is illustrated in FIG. 5 (c). Then, the DMA controller writes data from the changed location indicated by the first write pointer.

As described above, the buffer controller 111 can rewrite data previously written by protecting the data from being read.

Note that although the location indicated by the first read pointer is changed in response to a request notified by the control processor 118, an event notified by an external device other than the control processor 118 to a buffer controller may be used for changing the location.

Furthermore, when the location indicated by the first write pointer is moved, the location may be moved to the location indicated by the virtual write pointer, regardless of a location indicated by the read pointer.

Furthermore, although the virtual write pointer indicates a location of a buffer in which data has been written by a DMA controller, the pointer may indicate a location in which data is not written yet.

Furthermore, although the write pointer is changed to indicate the location indicated by the virtual write pointer in the present embodiment, the write pointer may be changed to indicate the location indicated by a write pointer other than this write pointer.

Furthermore, although the DMA controller that reads data and the DMA controller that writes data are different DMA controllers in the present embodiment, they may be an identical DMA controller.

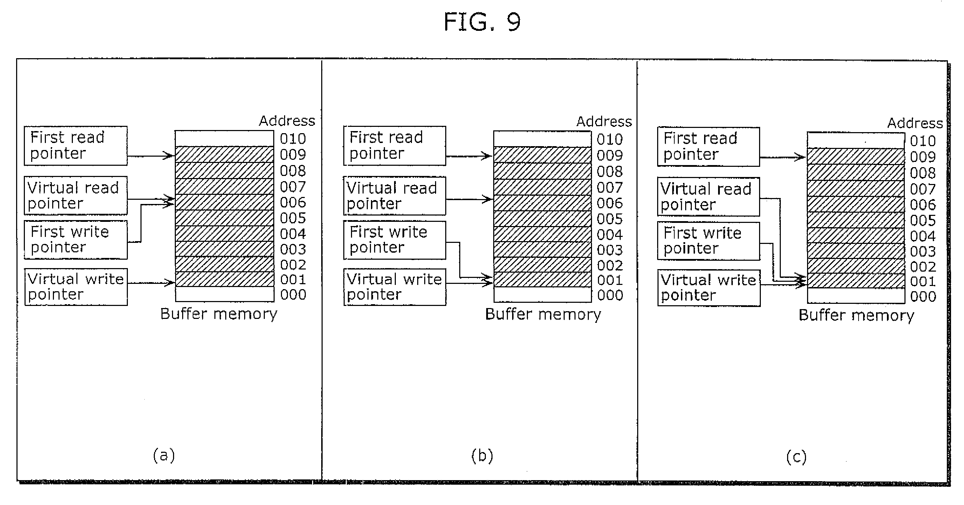

Next, using FIG. 9 (a) to (c), the third operation example in the case where a virtual read pointer and a virtual write pointer are set to "valid" is to be described. In the diagram, the virtual read pointer indicates a location of the buffer from which the DMA controller 116 has read data, simultaneously when indicating a location in which data write is disabled. The virtual write pointer indicates a location of the buffer in which the DMA controller 117 has written data, simultaneously when indicating a location in which data write is disabled.

FIG. 9 (a) illustrates a state in which the first write pointer indicates the same location of the buffer indicated by the virtual read pointer, in other words, a state in which data write in the buffer memory 119 has been disabled. In the state where data write has been disabled, the control processor 118 issues a request to the data read control unit 106 and the data write control unit 111 so that the data write control unit 111 changes the first write pointer to indicate a location of the buffer indicated by the virtual write pointer, using the write pointer control unit 110. The state is illustrated in FIG. 9 (b). Then, the data read control unit 106 changes the virtual read pointer to indicate a location indicated by the first write pointer, using the read pointer control unit 105. FIG. 9 (c) illustrates a state in which a location of the virtual read pointer has been changed and an area to be protected from being written is expanded by adding new data to the area to be protected.

As described above, the buffer controller 101 can change an area to be protected from being written, and in this case, the area can be expanded by adding new data to the area to be protected from being written.

Note that although the virtual read pointer is moved to the location of the virtual write pointer after the first write pointer is moved to the location of the virtual write pointer, the first write pointer and the virtual read pointer may be simultaneously moved to the location of the virtual write pointer.

Furthermore, although the locations indicated by the virtual write pointer and the virtual read pointer are changed in response to a request notified by a control processor, an event notified by an external device other than the control processor to a buffer controller may be used for changing the locations.

Furthermore, although it is described that the number of the read pointers and the write pointers are two, respectively above, it may be two or more.

Furthermore, although the DMA controller that reads data and the DMA controller that writes data are different DMA controllers in the present embodiment, they may be an identical DMA controller.

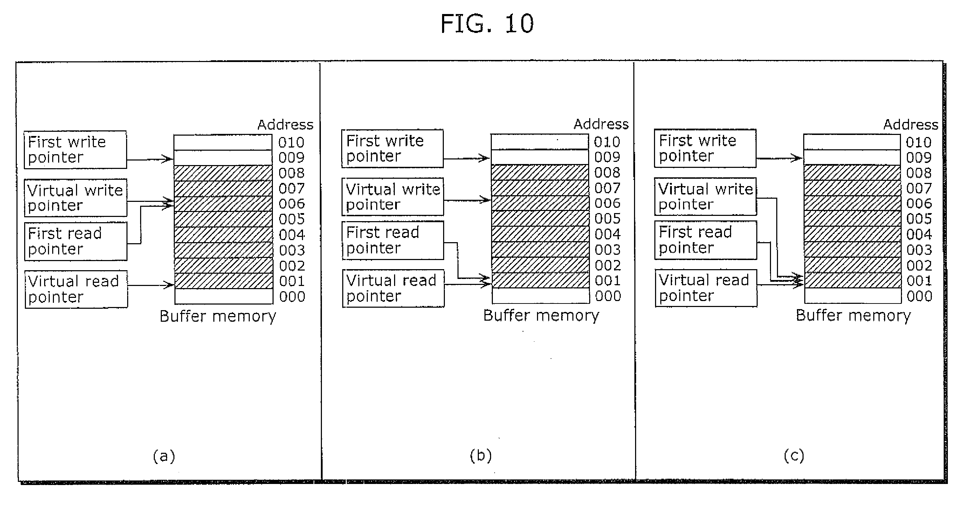

Next, using FIG. 10 (a) to (c), the fourth operation example in the case where a virtual read pointer and a virtual write pointer are set to "valid" is to be described.

FIG. 10 (a) illustrates a state in which the first write pointer indicates the same location of the buffer indicated by the virtual write pointer, in other words, a state in which data read has been disabled.

In this state, the control processor 118 issues a request to the data read control unit 106 and the data write control unit 111 so that the data read control unit 106 changes the first read pointer to indicate a location of the buffer indicated by the virtual read pointer, using the read pointer control unit 105. The state is illustrated in FIG. 10 (b). Then, the data write control unit 111 changes the virtual write pointer to indicate a location indicated by the first read pointer, using the write pointer control unit 110.

As described above, the buffer controller can change an area to be protected from being read, and in this case, the area can be expanded by adding data that once has been read to the area to be protected from being read.

Note that although the virtual write pointer is moved to the location of the virtual read pointer after the first read pointer is moved to the location of the virtual read pointer, the first read pointer and the virtual write pointer may be simultaneously moved to the location of the virtual read pointer.

Furthermore, although the locations indicated by the first read pointer and the virtual write pointer are changed in response to a request notified by a control processor, an event notified by an external device other than the control processor to a buffer controller may be used for changing the locations.

Furthermore, although it is described that the number of the read pointers and the write pointers are two, respectively above, it may be two or more.

Furthermore, although the DMA controller that reads data and the DMA controller that writes data are different DMA controllers in the present embodiment, they may be an identical DMA controller.

Next, using FIG. 10, a configuration of a picture decoding system is to be described as an application example of the buffer control device and the buffer memory device of the present invention. The present system includes a control processor 1001, a buffer controller 1002, a buffer memory 1003, a picture decoding device 1004, and a stream input control unit 1005. Among the constituent elements, the control processor 1001, the buffer controller 1002, and the buffer memory 1003 are identical to the control processor 118, the buffer controller 101, and the buffer memory 119, respectively.

Stream data is inputted from the stream input control unit 1005 to the buffer memory 1003 using the buffer controller 1002, and the picture decoding device 1004 reads the input stream data from the buffer memory 1003 using the buffer controller 1002 and performs picture decoding processing. The stream input control unit 1005, the picture decoding device 1004, and the buffer controller 1002 are controlled by the control processor 1001.

With this configuration, when an error (for example, header analysis error) occurs in the picture decoding device 1004 during the input stream data processing, the stream data in which the error has occurred can be reread from the buffer memory 1103 by setting a virtual read pointer in advance, and can speed up error recovery processing.

Note that the picture decoding system may include an audio decoding device instead of the picture decoding device 1004.

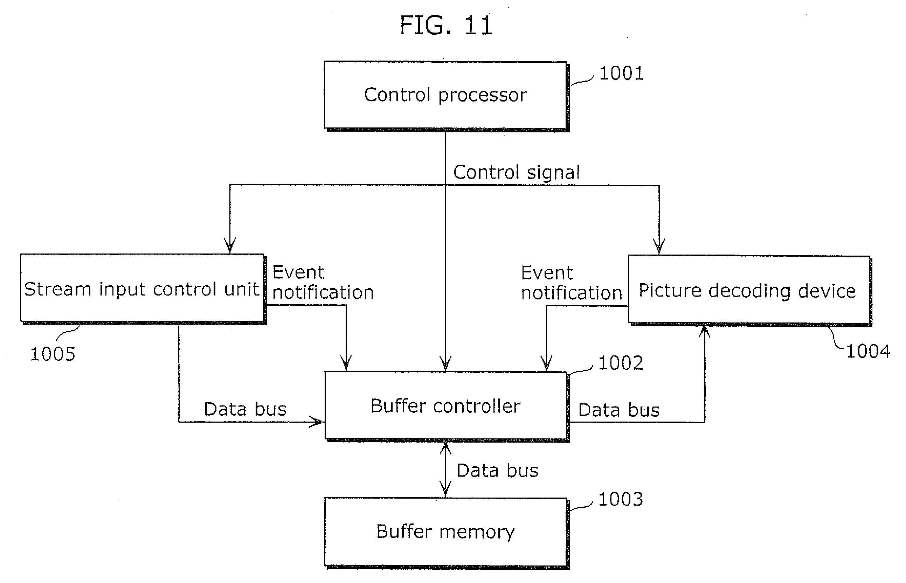

Next, using FIG. 11, a structure of a picture decoding system is to be described as an application example of the buffer control device and the buffer memory device of the present invention. The diagram is different from FIG. 10 in having a picture coding device 1105 and a stream output control unit 1104 instead of the picture decoding device 1004 and the stream input control unit 1005. The description for the common points is omitted, and thus differences are to be mainly described. The coded stream data is inputted from the picture coding device 1105 to the buffer memory 1103 using the buffer controller 1101. Then, the stream output control unit 1104 reads the coded stream data from the buffer memory 1103 using the buffer controller 1102, and outputs the stream. The stream output control unit 1104, the picture coding device 1105, and the buffer controller 1102 are controlled by the control processor 101.

With this configuration, the picture coding device 1105 can once output data that is insufficient on an access border of the buffer memory 1103 when outputting stream data, by setting a virtual write pointer in advance, and again, can overwrite data that has reached the access border.

Note that the picture coding system may include an audio coding device instead of the picture coding device 1105.

Note the read pointer control unit 105 may update an address of a pointer so as to keep a difference between a value of the first read pointer and a value of the virtual pointer as constant without fixing the value of the virtual read pointer. For example, a constant value of the difference may be identical to a header size of stream data and to a size equivalent to a size of a data unit that is processed by an external reading device.

Furthermore, the first read pointer may indicate an address of data to be lastly read, not an address of unread leading data. In such a case, the first read pointer has only to be updated immediately before a read access, not immediately after the read access.

Although the present embodiment describes that the first read pointer is incremented for each read access and the first write pointer is incremented for each write access, the first read pointer may be decremented for each read access, and the first write pointer may be decremented for each write access.

### (Second Embodiment)

A block diagram illustrating the system configuration including the buffer memory device having the buffer control device according to the second embodiment. The description identical to that of the first embodiment is omitted, and thus differences with the first embodiment are mainly described. In the first embodiment, the first read pointer is used for a rereading operation, and the first write pointer is used for a rewriting operation. In contrast, in the second embodiment, a reread-only pointer is used for a rereading operation, and a rewrite-only pointer is used for a rewriting operation.

Since the number of pointers held in the read pointer holding unit 102 is three (n=3), the read pointer holding unit 102 holds the first to the third read pointers. Furthermore, since the number of pointers held in the write pointer holding unit 107 is three (n=3), the write pointer holding unit 107 holds the first to the third write pointers.

Although the first read pointer is almost the same as the first read pointer in the first embodiment, they are different in that the first read pointer in the second embodiment is not used for rereading data. In other words, the first read pointer is not changed for rereading data. The second read pointer is a virtual read pointer as the second read pointer in the first embodiment. The third read pointer is a reread pointer and is updated (incremented) for each read access. In the pointer, an address within an address range between the first read pointer and the second read pointer is set according to an instruction from a master. In such a case, an address of the third read pointer cannot exceed an address indicated by the first read pointer.

Although the first write pointer is almost the same as the first write pointer in the first embodiment, they are different in that the first write pointer in the second embodiment is not used for rewriting data. In other words, the first write pointer is not changed for rewriting data. The second write pointer is a virtual write pointer as the second write pointer in the first embodiment. The third write pointer is a rewrite pointer and is updated (incremented) for each write access. In the pointer, an address within an address range between the first write pointer and the second write pointer is set according to an instruction from a master. In such a case, an address of the third write pointer cannot exceed an address indicated by the first write pointer.

With this configuration, there is an advantage that rereading or rewriting can be performed only by switching the first read pointer or the first write pointer to the third read pointer or the third write pointer that has been set in advance.

### (Third Embodiment)

A block diagram illustrating the system configuration including the buffer memory device having the buffer control device according to the third embodiment. The description identical to that of the first embodiment is omitted, and thus differences with the first embodiment are mainly described. Since the number of pointers held in the read pointer holding unit 102 is n (for example, ten), and the first and the second read pointers can be selected from among the n number of pointers. Since the number of pointers held in the read pointer holding unit 102 is n (for example, ten), and the first and the second read pointers can be selected from among the n number of pointers. Furthermore, since the number of pointers held in the write pointer holding unit 107 is also n (for example, ten), and the first and the second write pointers can be selected from among the n number of pointers.

With this, there is an advantage that rereading can be performed only by switching pointers, for example, by selecting one of two first read pointers, namely, the current first read pointer and the first reread pointer, and setting, in advance in the first reread pointer, the same address as the address of the second reread pointer.

Note that the first to the third read pointers from the n number of read pointers and the first to the third write pointers from the n number of write pointers may be selected in the second embodiment.

### Industrial Applicability

The present invention can implement a superior buffer controller capable of not only protecting, rereading, and rewriting data but also skipping reading and skipping writing of data, and is useful as a buffer controller, such as a picture coding device and a picture decoding device.

## Claims

1. A buffer control device that controls a buffer memory as a first-in first-out ring buffer, using a read pointer and a write pointer, said buffer control device comprising:
a pointer holding unit which holds a virtual pointer different from the read pointer and the write pointer;
an access control unit operable to control an access to the ring buffer, according to the read pointer and the write pointer;
a judging unit operable to judge whether or not one of the read pointer and the write pointer has reached an address substantially identical to an address indicated by the virtual pointer; and
a disabling unit operable to disable a normal access using the one of the read pointer and the write pointer, when said judging unit judges that the one of the read pointer and the write pointer has reached the address substantially identical to the address indicated by the virtual pointer, the normal access being controlled by said access control unit,
wherein said access control unit is further operable to control a reaccess to the ring buffer, within an address range from the address indicated by the virtual pointer to an address indicated by the other of the read pointer and the write pointer, in response to a request from an external device.

2. The buffer control device according to Claim 1,
wherein the one of the read pointer and the write pointer is the write pointer,
said disabling unit includes a flag holding unit which holds, as a stop flag, a result of the judging obtained by said judging unit,
said access control unit is operable to disable a write access to the ring buffer according to the stop flag, and is operable to control rereading data from the ring buffer, within an address range from the address indicated by the virtual pointer to an address indicated by the read pointer, in response to a request from the external device.

3. The buffer control device according to Claim 2, further comprising
a pointer setting unit operable to set a value of the virtual pointer, in response to a request from the external device.

4. The buffer control device according to Claim 3,
wherein said pointer setting unit holds a valid flag indicating whether or not the virtual pointer is valid, in response to a request from the external device,
said judging unit includes:
a first judging unit operable to judge whether or not the write pointer has reached an address substantially identical to the address indicated by the read pointer, when the valid flag indicates that the virtual pointer is invalid; and
a second judging unit operable to judge whether or not the write pointer has reached the address substantially identical to an address indicated by the virtual pointer, when the valid flag indicates that the virtual pointer is valid, and
the stop flag holds a result of the judging obtained by said first judging unit, when the valid flag indicates that the virtual pointer is invalid, and holds a result of the judging obtained by said second judging unit, when the valid flag indicates that the virtual pointer is valid.

5. The buffer control device according to Claim 2, further comprising
a pointer setting unit operable to set the virtual pointer so as to keep a difference between a value of the read pointer and a value of the virtual pointer constant.

6. The buffer control device according to one of Claims 3 and 5,
wherein said pointer setting unit is operable to change the read pointer to indicate an address within the address range, in response to a request from the external device, and
said access control unit is operable to control the rereading of data from the ring buffer, according to the changed read pointer.

7. The buffer control device according to one of Claims 3 and 5,
wherein said access control unit is operable to control the rereading of data from the ring buffer according to the virtual pointer, in response to a request from the external device, and
the virtual pointer is updated when said access control unit controls the rereading of data.

8. The buffer control device according to one of Claims 3 and 5,
wherein said pointer holding unit holds a reread pointer indicating an address within the address range,
said access control unit is operable to control the rereading of data from the ring buffer according to the reread pointer, and
the reread pointer is updated when said access control unit controls the rereading of data.

9. The buffer control device according to Claim 1,
wherein the one of the read pointer and the write pointer is the read pointer,
said disabling unit includes a flag holding unit which holds, as a stop flag, a result of the judging obtained by said judging unit,
said access control unit is operable to disable a read access to the ring buffer according to the stop flag, and is operable to control rewriting data to the ring buffer, within an address range from the address indicated by the virtual pointer to an address indicated by the write pointer, in response to a request from the external device.

10. The buffer control device according to Claim 9,
a pointer setting unit operable to set a value of the virtual pointer, in response to a request from the external device.

11. The buffer control device according to Claim 10,
wherein said pointer setting unit holds a valid flag indicating whether or not the virtual pointer is valid, in response to a request from the external device,
said judging unit includes:
a first judging unit operable to judge whether or not the read pointer has reached an address substantially identical to the address indicated by the write pointer, when the valid flag indicates that the virtual pointer is invalid; and
a second judging unit operable to judge whether or not the read pointer has reached an address substantially identical to the address indicated by the virtual pointer, when the valid flag indicates that the virtual pointer is valid, and
the stop flag holds a result of the judging obtained by said first judging unit, when the valid flag indicates that the virtual pointer is invalid, and holds a result of the judging obtained by said second judging unit, when the valid flag indicates that the virtual pointer is valid.

12. The buffer control device according to Claim 9,
a pointer setting unit operable to set the virtual pointer so as to keep a difference between a value of the write pointer and a value of the virtual pointer constant.

13. The buffer control device according to one of Claims 10 and 12,
wherein said pointer setting unit is operable to change the write pointer to indicate an address within the address range, in response to a request from the external device, and
said access control unit is operable to control the rewriting of data to the buffer memory, according to the changed write pointer.

14. The buffer control device according to one of Claims 10 and 12,
wherein said access control unit is operable to control the rewriting of data to the ring buffer according to the virtual pointer, in response to a request from the external device, and
the virtual pointer is updated when said access control unit controls the rewriting of data.

15. The buffer control device according to one of Claims 10 and
12,
wherein said pointer holding unit holds a rewrite pointer indicating an address within the address range,
said access control unit is operable to control the rewriting of data to the ring buffer according to the rewrite pointer, and
the rewrite pointer is updated when said access control unit controls the rewriting of data.

16. The buffer control device according to one of Claims 1 to 15,
wherein said pointer holding unit holds pointers, and
said buffer control device further comprises
a selecting unit operable to select the read pointer, the write pointer, and the virtual pointer from among the pointers.

17. A buffer memory device comprising:
a buffer memory that temporarily holds data;
a pointer holding unit which holds a read pointer indicating an address for reading the data stored in said buffer memory, a write pointer indicating an address for writing the data stored in said buffer memory, and a virtual pointer different from the read pointer and the write pointer;
a pointer control unit operable to control the read pointer and the write pointer so that said buffer memory functions as a first-in first-out ring buffer;
an access control unit operable to control an access to the ring buffer according to the read pointer and the write pointer,
a judging unit operable to judge whether or not one of the read pointer and the write pointer has reached an address substantially identical to an address indicated by the virtual pointer; and
a disabling unit operable to disable a normal access using the one of the read pointer and the write pointer, when said judging unit judges that the one of the read pointer and the write pointer has reached the address substantially identical to the address indicated by the virtual pointer, the normal access being controlled by said access control unit,
wherein said access control unit is further operable to control an access to the ring buffer, within an address range from the address indicated by the virtual pointer to an address indicated by the other of the read pointer and the write pointer, in response to a request from an external device.
